# EUROPÄISCHE PATENTSCHRIFT

(11) **EP 2 022 307 B1**
(45) Veröffentlichungstag und Bekanntmachung des Hinweises auf die Patenterteilung: **25.07.2012**
(21) Anmeldenummer: 08009123.4
(22) Anmeldetag: 16.05.2008
(51) Int. Cl.: A01C 7/04, A01C 7/20

(54) **Säschar**
Seed drill coulter
Soc de semoir

(30) Priorität: 03.08.2007 DE 102007036662
(43) Veröffentlichungstag der Anmeldung: 11.02.2009
(73) Patentinhaber: Amazonen-Werke H. Dreyer GmbH & Co. KG, 49205 Hasbergen (DE)
(72) Erfinder: Olderog-Enge, Arndt, 23769 Dänschendorf a/F. (DE)

(56) Entgegenhaltungen:
- EP-A- 0 707 784
- AU-B2- 567 228
- DE-A1- 10 313 180
- US-A- 4 608 933

## Beschreibung

Die Erfindung betrifft ein Säschar gemäß des Oberbegriffes des Patentanspruches 1.

Ein derartiges Säschar ist durch die DE 103 13 180 A1 bekannt. Dieses Säschar ist zur Ablage des von dem Vereinzelungsorgan einer Einzelkornsämaschine vereinzelten Saatgutes in definierten Abständen im Boden bestimmt. Dass Säschar ist kompakt aufgebaut. Die Saatgutzuführungsleitung, insbesondere das Ende der Saatgutzuführungsleitung und deren Auslassöffnungen, über welche das Saatgut in der von den Furchöffnungselementen geschaffenen Furche abgelegt wird, ist schlecht zugänglich angeordnet. Wenn es zu Verstopfungen, insbesondere des Endbereiches der Saatgutzuführungsleitung und deren Auslassöffnungen kommt, ist es nur mit einem hohen Aufwand möglich, die Verstopfung der Saatgutzuführungsleitung und deren Auslassöffnung zu beseitigen. Auch ist die Montage der Saatgutzuführungsleitung in ihrem Endbereich an dem Säschar relativ schwierig.

Der Erfindung liegt die Aufgabe zugrunde, eine vereinfachte Zugänglichkeit, Montage und Wartung der Saatgutzuführungsleitung und der nach- und zugeordneten Saatgutfang- und/oder Saatgutandruckrolle an dem Säschar in einfacher Weise zu schaffen.

Diese Aufgabe wird erfindungsgemäß dadurch gelöst, dass die Saatgutzuführungsleitung und die Saatgutfang- und/oder Saatgutandruckrolle an einem an dem Scharhalter in lösbarer und/oder wegschwenkbarer Weise angeordneten Halteelement angeordnet sind. Infolge dieser Maßnahme kann das Halteelement, an welchem die Saatgutzuführungsleitung und die Saatgutfang- und/oder Saatgutandruckrolle angeordnet sind,von dem Scharhalter gelöst und/oder weggeschwenkt werden, so dass der Endbereich der Saatgutzuführungsleitung und deren Auslassbereich in einen leicht und bequem zugänglichen Bereich verschwenkt werden können. Hierdurch wird das Beseitigen von Verstopfungen und die Montage bzw. Demontage der Saatgutzuführungsleitung wesentlich erleichtert.

Um diese Zugänglichkeit in einfacher Weise zu gewährleisten, ist vorgesehen, dass das Halteelement mittels einer Schwenklagerung an dem Scharhalter angeordnet ist. Hierdurch ist es in einfacher Weise möglich, das Halteelement mit der daran angeordneten Saatgutzuführungsleitung und Rollen aus dem schlecht zugänglichen Bereich des Säschares in einen leicht zugänglichen Bereich zu verschwenken, nachdem eine Arretierungsvorrichtung gelöst worden ist.

In einer anderen Ausführungsform ist vorgesehen, dass das Halteelement mittels einer Steckverbindung an dem Scharhalter angeordnet ist. Infolge dieser Maßnahme kann das Halteelement mit daran angeordneten Rollen und Saatgutzuführungsleitung in einfacher Weise über die Steckverbindung von dem Scharhalter abgenommen und an ihn wieder angeordnet werden.

Um in einfacher Weise nach dem Verschwenken oder Lösen des Halteelementes mit daran angeordneten Saatgutzuführungsleitung und Rollen auch in schwierigen Fällen die Verstopfungen zu beseitigen zu können, ist vorgesehen, dass zumindest der Endbereich der Saatgutzuführungsleitung abnehmbar an dem Halteelement befestigt ist.

Des Weiteren wird durch die lösbare Anordnung der Saatgutzuführungsleitungen und der Saatgutfang- und/oder Saatgutandruckrolle über das Halteelement an dem Scharhalter die Voraussetzung dazu geschaffen, dass diese aus Saatgutzuführungsleitung und Saatgutfang- und/oder Saatgutandruckrolle bestehende und an dem Halteelement angeordnete Einheit in austauschbarer Weise wahlweise an den Scharhaltern unterschiedlich ausgebildeter Furchenöffnungselemente, wie beispielsweise Doppelscheibenscharen mit zugeordneten Tiefenführungsrollen, Scheibenscharen, Zinkenscharen etc. angeordnet werden können.

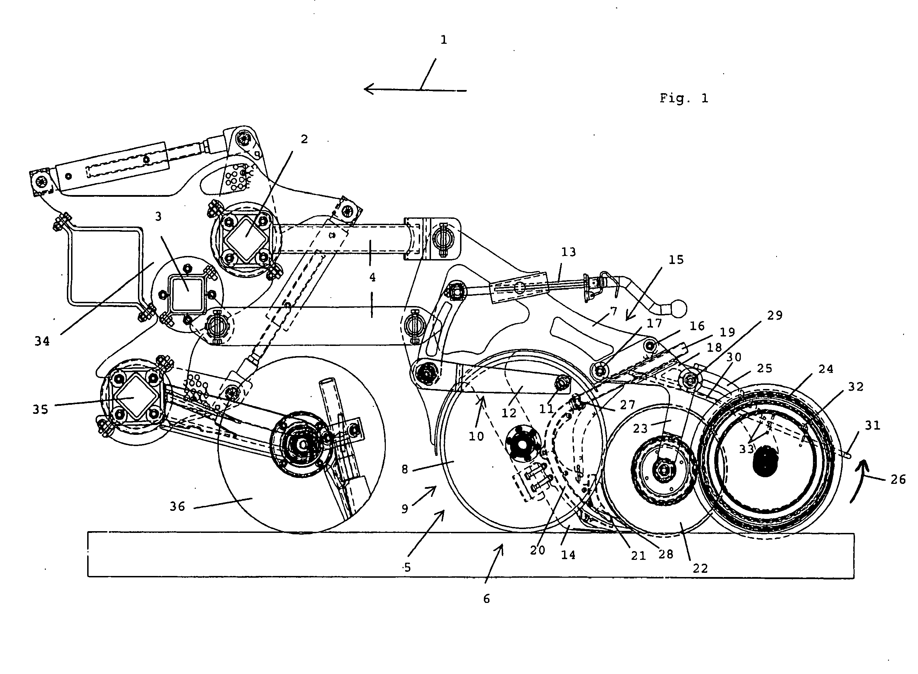

Weitere Einzelheiten der Erfindung sind der Beispielsbeschreibung und den Zeichnungen zu entnehmen. Hierbei zeigen
- Fig. 1: das Säschar einer Einzelkornsämaschine in Arbeitsstellung und in Seitenansicht und
- Fig. 2: das Säschar mit in Wartungsstellung verschwenktem Halteelement mit Saatgutzuführungsleitung und Saatgutfang- und Andruckrollen in Seitenansicht.

An den sich quer zur Fahrtrichtung 1 erstreckenden Tragbalken 2 und 3 sind mittels Parallelogrammlenker 4 mehrere Säschare 5 beabstandet zueinander angeordnet. Diese Säschare 5 sind Bestandteil einer pneumatischen Einzelkornsämaschine denen das sich im Vorratsbehälter der Sämaschine befindliche Saatgut über eine Vereinzelungsvorrichtung über pneumatisch beaufschlagte Saatleitungen zugeführt wird. Die Säschare 5 legen die Saatkörner des Saatgutes beabstandet und gleichmäßig in den von den Furchenöffnungselementen 6 der Säschare 5 gezogenen Furchen ab.

Jedes Säschar 5 weist einen Scharhalter 7 auf, der über die beiden Parallelogrammlenker 4 an den quer zur Fahrtrichtung 1 verlaufenden Trägern 2, 3 der Querbalkenanordnung in aufrechter Ebene bewegbar angeordnet sind. An dem Scharhalter 7 sind mittels Drehlagerungen die Scharscheiben 8 eines Doppelscheibenschares 9 frei drehbar angeordnet. Über die dargestellte Halterung 10 ist jeweils seitlich neben den Scheiben 8 des Doppelscheibensäschares 9 ein nicht dargestelltes Tiefenführungsrad frei drehbar auf der Welle 11 des einstellbaren Winkelschwenkarmes 12 angeordnet. Über diesen Winkelschwenkarm 12 ist mittels der als Einstellspindel 13 ausgebildeten Einstellvorrichtung die Lage des an der Lagerung der Welle 11 befestigten Tiefenführungsrades zu der Scharscheibe 8 und somit die Eindringtiefe der Scharscheiben 8 des Doppelscheibenschares 9 im Boden einzustellen. An der Scharhalterung 7 ist zwischen den beiden Scharscheiben 8 des Doppelscheibenschares 9 der Furchenformer 14 angeordnet. Die Scharscheiben 8 des Doppelscheibenschares 9 und der Furchenformer 14 bilden das Furchenöffnungselement 6.

An dem hinteren Bereich 15 der Scharhalterung 7 ist mittels des Schwenklagers 16 und eines Arretierbolzens 17 das Halteelement 18 in wegschwenkbarer Weise befestigt. An diesem Halteelement 18 ist die Saatgutzuführungsleitung 19, die im unteren Bereich als nach hinten weisender Schusskanal 20 ausgebildet ist und an seinem hinteren Ende die Auslassöffnung 21 für die in der Säfurche abzulegenden Saatgutkörner aufweist. Hinter der Saatgutzuführungsleitung 19 und dem Schusskanal 20 ist beanstandet vor der Auslassöffnung 21 der Saatgutzuführungsleitung 19 bzw. des Schusskanals 20 die frei drehbar angeordnete Saatgutfangrolle 22 über einen Haltearm 23 angeordnet. Hinter der Saatgutfangrolle 22 sind zwei V-förmig zueinander angestellte Saatandruckrollen 24 über den Schwenkarm 25 an dem Halteelement 18 befestigt.

Während des Einsatzes der Maschine ist das Halteelement 18 über die Schwenklagerung 16 und den Arretierungsbolzen 17 drehfest und starr mit der Scharhalterung 7 verbunden.

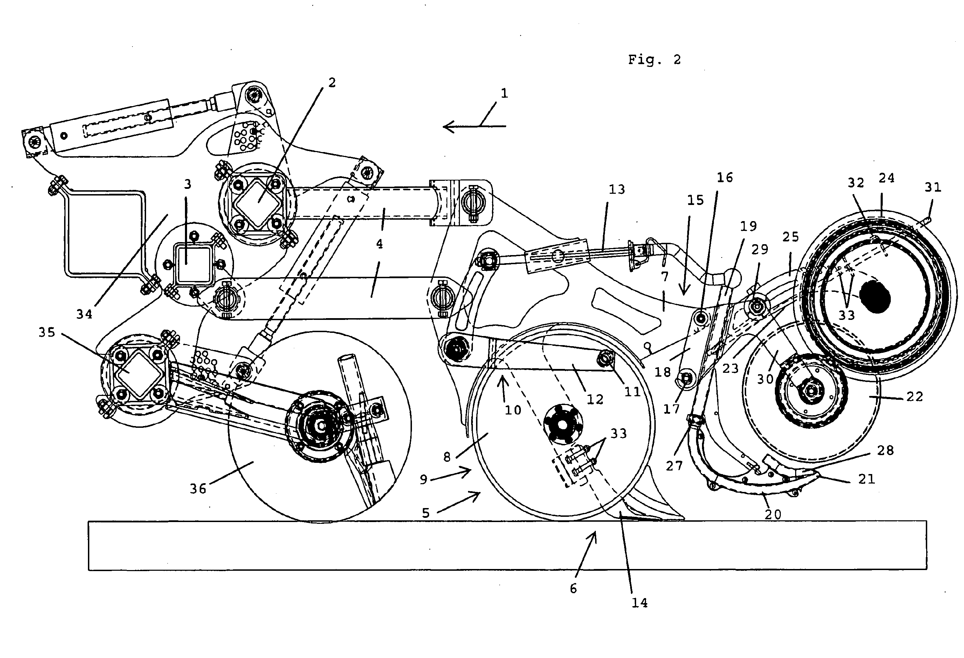

Zu Wartungszwecken und falls der untere Bereich des Saatgutzuführungsleitung 19, der als Schusskanal 20 ausgebildet ist bzw. deren Auslassöffnung 21 verstopft sein sollte, lässt sich der Arretierungsbolzen 17 entfernen, so dass das Halteelement 18 mit der Saatgutzuführungsleitung 19 und der Saatfanggutrolle sowie den Saatgutandruckrollen 24 in Pfeilrichtung 26 von dem als Scheibenschar 9 ausgebildeten Furchenöffnungselement 6 weg bzw. aus diesem Bereich herausgeschwenkt werden kann, wie dies Fig. 2 zeigt. In dieser nach hinten geschwenkten Stellung ist der hintere Bereich der Saatgutzuführungsleitung 19, die als Schusskanal 20 ausgebildet ist, sowie deren Auslassöffnung 21 gut zugänglich, so dass Verstopfungen beseitigt werden können. Durch Lösen des Verbindungselementes 27, welches den hinteren Bereich als gekrümmten Schusskanal 20 ausgebildeten Saatgutzuführungsleitung 19 bildet, kann diese von der Halterung 18 abgenommen werden und so in bequemer und gut zugänglicher Weise gereinigt werden.

Zusätzlich ist an der Halterung 18 noch eine weitere Materialzuführungsleitung 28 angeschlossen, an welche eine Materialzuführungsleitung anzuschließen ist, um weiters Material, z.B. Mikrogranulat gleichzeitig mit dem Saatgut ausbringen zu können.

An den oberen Enden der an dem Halteelementen 18 angeschlossenen Saatgutzuführungsleitung werden in nicht dargestellter Weise die von dem Vereinzelungsorgan zu den Saatgutzuführungsleitungen führenden, pneumatisch beaufschlagte Saatleitungen angeschlossen.

Damit die Saatandruckrollen 24 mit jeweils den entsprechenden Einsatzbedingungen angepasster Federkraft gegen den Boden gedrückt werden kann, ist zwischen dem Halteelement 18 und dem die Saatandruckrollen 24 tragende Schwenkarm 25, der mittels einer Schwenklagerung 29 an dem Halteelement 18 angeordnet ist, eine Schenkelfeder 30 angeordnet. Um den Druck in gewünschter Weise einstellen zu können, ist auf dem frei nach hinten ragenden Schenkel 31 der Schenkelfeder 30 ein U-förmiges Einstellelement 32 angeordnet, welches auf dem freien Ende des Schenkels 31 der Schenkelfeder 30 verschiebbar ist und je nach aufzubringendem Druck in einer der in den Schwenkarm 25 angebrachten Kerbe 33 einzurasten ist.

Nach dem Wegschwenken der Halterung 18 mit der Saatgutführungsleitung 19, der Saatgutfangrolle 22 und den Saatgutandruckrollen 24 sind die Befestigungsmittel 33 für den Fächerformer 14 an der Halterung 7 in einfacher Weise erreichbar.

An dem die Tragbalken 2 und 3 für die Säschare 5 tragenden Rahmenhalter 34, die an einem zentralen Querträger befestigt sind, ist noch der Tragbalken 35 für die beabstandet zueinander angeordneten Düngerschare 36 angeordnet.

## Patentansprüche

1. Säschar mit zumindest einem an einem Scharhalter (7) angeordneten Furchenöffnungselement und hinter dem Furchenöffnungselement angeordneter Saatgutzuführungsleitung (19,20) und nach- und zugeordneter Saatgutfang- (22) und/oder Saatgutandruckrolle (24),
**dadurch gekennzeichnet, dass** die Saatgutzuführungsleitung (19,20) und die Saatgutfang- (22) und/oder Saatgutandruckrolle (24) an einem an dem Scharhalter (7) in lösbarer und/oder wegschwenkbarer Weise angeordneten Halteelement (18) angeordnet sind.

2. Säschar nach Anspruch 1, **dadurch gekennzeichnet, dass** das Halteelement (18) mittels einer Schwenklagerung (16) an dem Scharhalter (7) angeordnet ist.

3. Säschar nach Anspruch 1, **dadurch gekennzeichnet, dass** das Halteelement (18) mittels einer Steckverbindung an dem Scharhalter (7) angeordnet ist.

4. Säschar nach Anspruch 1, **dadurch gekennzeichnet, dass** zumindest der Endbereich (20) der Saatgutzuführungsleitung (19) abnehmbar an dem Halteelement (18) befestigt ist.

## Claims

1. Seed drill coulter having at least one furrow opening element arranged on a coulter holder (7), and a seed supply line (19, 20) arranged behind the furrow opening element, and an associated downstream seed catching (22) and/or seed pressure roller (24), **characterized in that** the seed supply line (19,20) and the seed catching (22) and/or seed pressure roller (24) are disposed on a holding element (18) arranged in a detachable and/or swing-away manner on the coulter holder (7).

2. Seed drill coulter according to Claim 1, **characterized in that** the holding element (18) is arranged on the coulter holder (7) by means of a pivot bearing (16).

3. Seed drill coulter according to Claim 1, **characterized in that** the holding element is arranged an the coulter holder by means of a plug connection.

4. Seed drill coulter according to Claim 1, **characterized in that** at least the end region (20) of the seed supply line (19) is removably fastened to the holding element (18).

## Revendications

1. Soc de semoir comportant au moins un élément d'ouverture de sillon installé sur un support de soc (7) et derrière cet élément d'ouverture de sillon, une conduite d'alimentation en semence (19, 20) et un rouleau receveur (22) et/ou tasseur de semence (24) en aval et/ou associé, **caractérisé en ce que**
la conduite d'alimentation en semence (19, 20) et le rouleau receveur (22) et/ou tasseur de semence (24) sont installés sur un élément de fixation (18) monté sur le support de soc (7) de manière amovible et/ou escamotable.

2. Soc de semoir selon la revendication 1,
**caractérisé en ce que**
l'élément de fixation (18) est installé sur le support de soc (7) par l'intermédiaire d'un palier de pivotement (16).

3. Soc de semoir selon la revendication 1,
**caractérisé en ce que**
l'élément de fixation (18) est installé sur le support de soc (7) par l'intermédiaire d'une liaison par enfichage.

4. Soc de semoir selon la revendication 1,
**caractérisé en ce que**
au moins la zone d'extrémité (20) de la conduite d'alimentation en semence (19) est fixée de manière amovible à l'élément de fixation (18).
